Europäisches Patentamt

European Patent Office

Office européen des brevets

(11) Numéro de publication: **0 074 910**

**A1**

# (12) DEMANDE DE BREVET EUROPEEN

(21) Numéro de dépôt: **82401689.3**

(22) Date de dépôt: **17.09.82**

(51) Int. Cl.³: **H 02 J 9/06**
**H 02 J 3/42**

(30) Priorité: **17.09.81 FR 8117600**

(43) Date de publication de la demande:
**23.03.83 Bulletin 83/12**

(84) Etats contractants désignés:
**BE CH DE GB IT LI LU NL**

(71) Demandeur: **ETABLISSEMENTS PIERRE FONTAINE**
**20, avenue Arago - Z.I.**
**F-91380 Chilly Mazarin(FR)**

(72) Inventeur: **Legoult, Michel Claude**
**Rue des Hauts Bouillants**
**F-77190 Dammarie les Lys(FR)**

(74) Mandataire: **Gorree, Jean-Michel et al,**
**Cabinet Plasseraud 84, rue d'Amsterdam**
**F-75009 Paris(FR)**

(54) **Perfectionnements apportés aux procédés et aux dispositifs d'alimentation électrique alternative d'une charge, sans discontinuité du signal alternatif.**

(57) L'invention concerne l'alimentation électrique alternative, sans discontinuité, d'une charge, à partir d'une source principale alternative (bornes 13, 14) ou d'une source auxiliaire de secours (bornes 15, 16).

Lorsque la source principale est à nouveau reliée aux bornes (13, 14) à la fin d'une coupure, on commande (en 26) une diminution de la fréquence de l'oscillateur (19) de l'onduleur statique (19, 20, 3), fréquence qui est comparée (en 27) à celle de la source principale. A la coïncidence, on raccorde, avec des interrupteurs (28, 24), la source principale au primaire du transformateur (1) et on bloque (en 23) l'onduleur statique.

FIG 1.

<u>Perfectionnements apportés aux procédés et aux dispositifs</u>
<u>d'alimentation électrique alternative d'une charge, sans</u>
<u>discontinuité du signal alternatif</u>

La présente invention concerne des perfectionnements apportés à l'alimentation électrique alternative ininterruptible d'une charge, c'est-à-dire la fourniture sans interruption, à une charge, d'une énergie électrique alternative quel que soit l'état (en fonctionnement ou en panne) d'une source d'alimentation alternative principale (généralement le secteur), le passage de la source d'alimentation alternative principale à une source d'alimentation auxiliaire de secours et vice versa devant s'effectuer sans discontinuité ni saut de fréquence du signal alternatif délivré à la charge.

L'invention vise également des perfectionnements apportés aux dispositifs d'alimentation électrique aptes à délivrer sans interruption une énergie électrique alternative à une charge, comportant :

- un transformateur possédant un ensemble secondaire connectable à la charge à alimenter,
- des premiers moyens de connexion à une source électrique alternative principale, ces premiers moyens de connexion étant raccordés à l'ensemble primaire du transformateur,
- des seconds moyens de connexion à une source électrique continue auxiliaire, ces seconds moyens étant raccordés à des moyens oscillateurs de puissance eux-mêmes raccordés à l'ensemble primaire du transformateur,
- des moyens de détection d'une panne de la source principale,
- des moyens de commande, placés sous la dépendance desdits moyens de détection, pour commander sélectivement l'alimentation de l'ensemble primaire du transformateur soit à partir de la source principale lorsque celle-ci est en état de fonctionnement, soit à partir de la source auxiliaire lorsque la source principale est en panne (coupure),
- et des moyens de synchronisation associés auxdits moyens de commande pour synchroniser le passage de l'alimentation d'une source à l'autre de manière telle qu'il n'en résulte aucune discontinuité dans l'alimentation alternative de la charge.

On connaît déjà différents dispositifs de ce type qui, toutefois, sont d'une conception complexe et qui par conséquent sont coûteux à la fabrication.

L'invention a essentiellement pour but de proposer un procédé et un dispositif d'alimentation électrique alternative ininterruptible qui répondent, mieux que ceux connus à l'heure actuelle, aux diverses exigences de la technique, le dispositif en particulier étant d'une structure simple, et donc facile et de moindre coût à fabriquer, tout en étant d'une grande fiabilité de fonctionnement.

Un premier aspect de l'invention a trait à un procédé pour, dans un dispositif d'alimentation électrique délivrant sans interruption une énergie alternative à une charge et susceptible d'être alimenté par une source principale et une source auxiliaire de secours, faire passer, sans discontinuité ni saut de fréquence de l'énergie alternative délivrée à la charge, l'alimentation de la charge de la source principale à la source auxiliaire lors de l'apparition d'une panne (coupure) de la source principale, et réciproquement de la source auxiliaire à la source principale lors de la disparition de ladite panne, la fréquence de la source auxiliaire étant en permanence synchronisée sur celle de la source principale tant que cette dernière est en fonctionnement, et qui, conformément à l'invention, se caractérise en ce qu'il comprend la succession des étapes suivantes :

- on détecte l'apparition d'une panne de la source principale,

- on déconnecte la charge de la source principale, ladite charge étant alors alimentée par la source auxiliaire d'une façon en soi connue,

- on détecte la disparition de la panne de la source principale,

- on fait dériver la fréquence de l'énergie alternative fournie par la source auxiliaire,

- on compare ladite fréquence de la source auxiliaire et la fréquence de la source principale,
- on détecte la venue en coïncidence de ces deux fréquences,
- et, au moment de cette coïncidence, on connecte à nouveau la charge sur la source principale et on arrête la fourniture d'énergie électrique à la charge à partir de la source auxiliaire.

De préférence, au cours de la panne de la source principale, la source auxiliaire fournit à la charge une énergie alternative ayant une fréquence égale à la fréquence nominale de la source principale.

Un second aspect de l'invention porte sur un dispositif d'alimentation du type précédemment mentionné, mettant en oeuvre le procédé ci-dessus, et qui se caractérise en ce que, pour le passage de l'alimentation depuis la source auxiliaire à l'alimentation depuis la source principale lors de la disparition d'une panne de cette dernière, les moyens de synchronisation comprennent :

- des moyens de détection de la fréquence de la source principale,
- des moyens de détection de la fréquence des moyens oscillateurs de puissance,
- des moyens de commande de dérive en fréquence des moyens oscillateurs de puissance, ces moyens de commande de dérive en fréquence étant sous la dépendance des moyens de détection de la fréquence de la source principale,
- des moyens de détection de la coïncidence des fréquences de la source principale et des moyens oscillateurs de puissance,
- et des moyens interrupteurs synchrones, placés sous la commande desdits moyens de détection de coïncidence des fréquences, pour déconnecter la source principale de l'ensemble primaire du transformateur lorsque survient une panne de la source principale et pour reconnecter la source principale à l'ensemble primaire du transformateur

4

lorsque ladite panne a disparu et que les susdites fréquences coïncident.

Grâce à cet agencement, on est assuré que le passage d'une source à l'autre ne peut s'effectuer que d'une façon synchrone, c'est-à-dire seulement lorsque coïncident les fréquences des deux sources. Les moyens mis en oeuvre dans ce dispositif sont simples et peu coûteux tout en étant fiables, conformément aux buts recherchés.

Avantageusement, les moyens de détection d'une panne de la source principale sont des moyens de détection de tension, les moyens de détection de la fréquence de la source principale et les moyens de détection de la tension de la source principale sont disposés dans cet ordre entre la source principale et l'ensemble primaire du transformateur, et les moyens interrupteurs synchrones sont disposés entre les moyens de détection de la fréquence et les moyens de détection de la tension de la source principale.

Dans un mode de réalisation particulier, dans lequel les moyens oscillateurs de puissance comprennent un oscillateur et un inverseur de puissance, on prévoit que les moyens de commande de dérive en fréquence sont raccordés à l'oscillateur.

Dans l'un ou l'autre des cas précédents, lorsque les moyens oscillateurs de puissance comprennent un oscillateur et un inverseur de puissance, on peut prévoir qu'entre l'oscillateur et l'inverseur de puissance est disposé un organe de blocage placé sous la commande des moyens de détection de la tension de la source principale de manière telle que, lorsque ladite source principale fonctionne normalement, les moyens de blocage déconnectent l'oscillateur et l'inverseur de puissance tandis que, en cas de panne de la source principale, les moyens de blocage connectent l'inverseur de puissance à l'oscillateur.

Dans un mode de réalisation préféré, on prévoit que la fréquence de la source auxiliaire est égale à la fréquence nominale de la source principale, et les moyens de commande de dérive en fréquence sont agencés pour provoquer une diminution de la fréquence de la source auxiliaire.

L'invention sera mieux comprise à la lecture de la description qui suit d'un mode de réalisation donné uniquement à titre d'exemple non limitatif, description dans laquelle on se réfère aux dessins annexés sur lesquels :
- la figure 1 est un schéma synoptique d'un dispositif d'alimentation conforme à l'invention, et
- la figure 2 est un schéma synoptique d'un mode de réalisation particulier d'une partie du dispositif d'alimentation de la figure 1.

Le dispositif d'alimentation de l'invention comprend un transformateur ferro-résonnant 1 avec deux enroulements primaires distincts 2 et 3, un enroulement secondaire d'utilisation 4 aux bornes 5, 6 duquel peut être raccordée une charge (non représentée) et un enroulement secondaire accordé 7, en série avec l'enroulement secondaire d'utilisation 4, un condensateur d'accord étant branché aux bornes extrêmes des enroulements secondaires 4, 7. Des shunts magnétiques 9 et 10 présentant une réluctance importante sont prévus pour isoler les enroulements primaires des enroulements secondaires respectifs.

Le premier enroulement primaire 2 est relié, par des conducteurs 11, 12, à des bornes 13, 14 permettant d'assurer la connexion avec une source électrique alternative (non représentée) ou source principale ; en pratique, il s'agit d'une source (telle que le secteur) à fréquence susceptible de varier entre deux limites extrêmes $f_{s\,min}$ et $f_{s\,max}$ (par exemple 50 Hz $\pm$ 2 Hz).

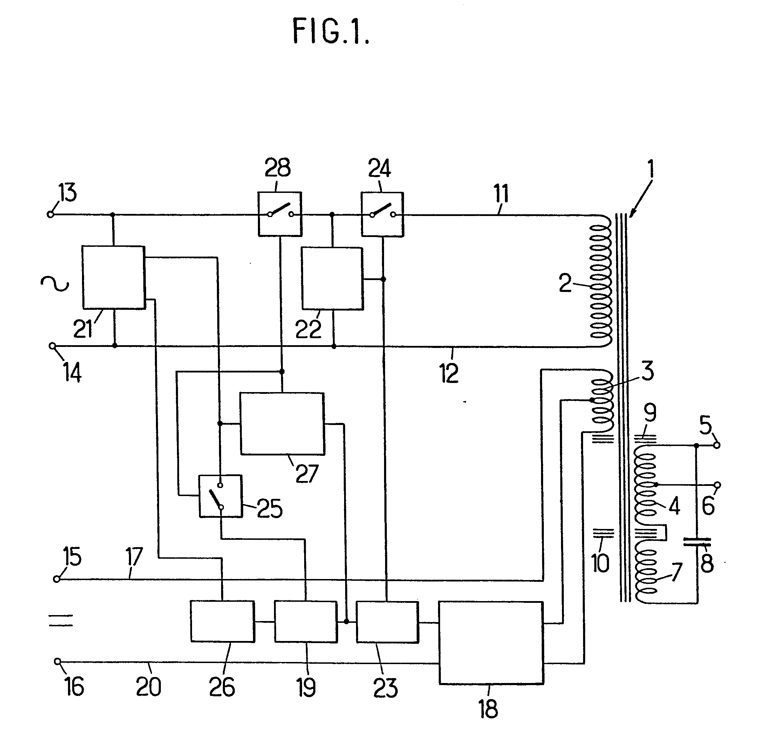

Le second enroulement primaire 3 est raccordé de la manière suivante à des bornes 15, 16 permettant d'assurer la connexion avec une source électrique continue (non représentée) ou source auxiliaire de secours, constituée en général par des batteries d'accumulateurs : l'une des bornes (15 sur la figure 1) est connectée par un conducteur 17 au point milieu du second enroulement primaire 3, tandis que les extrémités dudit enroulement sont connectées respectivement aux deux bornes de sortie (en opposition de phase) d'un inverseur de puissance 18, par exemple du type dit "push-pull", piloté par un oscillateur 19 ; par ailleurs, l'entrée de puissance de l'inverseur 18 est raccordée par un conducteur 20 à la borne 16.

Bien entendu, l'entrée alternative 13, 14 et l'entrée
continue 15, 16 peuvent avantageusement être équipées de
tous les dispositifs appropriés de protection et de filtrage (non représentés).

L'oscillateur 19 peut être de tout type connu ; en
particulier, il peut être constitué sous forme d'un oscillateur à relaxation à circuit RC et transistor uni-jonction
qui se prête facilement à une synchronisation externe. Il
fournit un signal ayant une fréquence nominale $f_0$ qui est
égale à la valeur nominale de la fréquence de la source
principale.

Aux bornes du premier enroulement secondaire 2 sont
branchés en parallèle, et dans l'ordre indiqué, un détecteur de fréquence de la source principale 21 situé côté
bornes de connexion 13, 14, et un détecteur de tension de
la source principale 22 situé côté enroulement primaire 2.
Le détecteur de tension est du type à détection rapide de
la chute d'une alternance en dessous d'une valeur prédéterminée (par exemple -10 % ou -15 % de la valeur nominale),
dont différents schémas possibles sont bien connus de
l'homme de l'art.

La sortie du détecteur de tension 22 est raccordée à
l'entrée de commande d'un dispositif de blocage 23 inséré
en série entre l'oscillateur 19 et l'inverseur de puissance
18 ; le dispositif de blocage 23 permet de relier l'un à
l'autre ou au contraire d'isoler l'un de l'autre l'oscillateur 19 et l'inverseur 18, en fonction du signal de commande qui lui est appliqué par le détecteur 22.

La sortie du détecteur de tension 22 est également
reliée à l'entrée de commande d'un premier interrupteur 24
inséré dans la ligne 11 entre l'enroulement primaire 2 et
le point de connexion de la ligne 11 au détecteur 22. L'interrupteur 24 peut avantageusement être un interrupteur à
éléments semi-conducteurs tels que deux thyristors disposés
tête-bêche en parallèle selon un montage classique.

Une sortie du détecteur de fréquence 21 est raccordée à un dispositif de commande 26 dont la sortie est reliée à l'oscillateur 19 et qui est apte à provoquer la dérive (ou le glissement) de la fréquence de l'oscillateur 19 (en particulier dans le sens d'une diminution de fréquence à partir de la fréquence nominale de l'oscillateur). Une autre sortie du détecteur de fréquence 21 est reliée, d'une part, à l'entrée de synchronisation de l'oscillateur 19 par l'intermédiaire de l'interrupteur 25 pour synchroniser celui-ci sur la source principale alternative, et, d'autre part, à une entrée d'un dispositif 27 de détection de coïncidence de la fréquence de la source principale et de la fréquence de l'oscillateur 19, ce dispositif 27 recevant sur une seconde entrée le signal fourni par l'oscillateur 19. La sortie du dispositif de détection de coïncidence 27 est reliée, d'une part, à l'entrée de commande de l'interrupteur 25 et, d'autre part, à l'entrée de commande d'un second interrupteur 28, dit interrupteur synchrone, inséré en série dans la ligne 11 entre les points de jonction de la ligne 11 avec les détecteurs de fréquence 21 et de tension 22, respectivement. L'interrupteur synchrone 28 peut être constitué sur le même modèle que l'interrupteur 24, sous forme de deux thyristors tête-bêche en parallèle.

Le fonctionnement du dispositif d'alimentation de l'invention est le suivant.

En fonctionnement normal, c'est-à-dire la source principale alternative alimentant normalement les bornes 13, 14, l'oscillateur 19 reçoit des impulsions de synchronisation en provenance du détecteur de fréquence 21 ; de ce fait, l'oscillateur 19 est exactement en phase avec la source principale et le dispositif de détection de coïncidence 27 compare deux signaux ayant exactement la même fréquence. Il engendre donc un signal de sortie qui ferme les interrupteurs 28 et 25.

Le détecteur de tension 22 détecte, quant à lui, une tension entre les lignes 11, 12, et il engendre donc un signal de sortie qui maintient l'interrupteur 24 en position de fermeture, mais qui maintient le dispositif de blocage 23 en position de blocage : autrement dit, l'inverseur de puissance 18 n'est pas raccordé à l'oscillateur 19 et il n'est donc pas en fonctionnement.

Il en résulte que le second enroulement primaire 3 du transformateur n'est pas sous tension et que seul est alimenté le premier enroulement primaire 2 du transformateur : la charge est alimentée uniquement à partir de la source principale alternative.

Dès qu'apparaît une coupure d'alimentation de la source principale alternative, le détecteur de tension 22 détecte l'absence de tension entre les lignes 11 et 12 et engendre aussitôt un signal de sortie provoquant, d'une part, le déblocage du dispositif 23 et donc le pilotage de l'inverseur de puissance 18 par l'oscillateur 19 pour alimenter le second enroulement primaire 3 du transformateur et, d'autre part, l'ouverture de l'interrupteur 24 pour éviter une réinjection, due au couplage des enroulements primaires 2 et 3, dans les lignes 11, 12 d'un signal provenant de l'enroulement 3, signal qui empêcherait le fonctionnement correct du dispositif.

Simultanément, le détecteur de fréquence 21 ne fournit plus de synchronisation à l'oscillateur 19 qui oscille alors librement à sa fréquence nominale $f_0$, et le dispositif de détection de coïncidence, ne recevant plus le signal de référence, engendre un signal de sortie provoquant l'ouverture de l'interrupteur synchrone 28 et celle de l'interrupteur 25.

Il en résulte que seul est sous tension le second enroulement primaire 3 du transformateur : la charge est alimentée uniquement à partir de la source auxiliaire continue. Compte tenu du fait que le temps de réponse du détecteur de tension est inférieur au temps de désaturation du transformateur ferro-résonnant lors de la coupure (soit 2 à 3 ms), l'inverseur de puissance se substitue à la source principale sans coupure de l'alimentation de la charge.

Lorsque la coupure disparaît et que les bornes 13, 14 sont à nouveau sous tension, le détecteur de fréquence 21 fournit un signal de sortie qui est appliqué à l'entrée correspondante du détecteur de coïncidence de fréquence 27 ; toutefois, comme la fréquence de la source principale est en général différente de la fréquence de libre oscillation de l'oscillateur 19, le signal de sortie du détecteur de coïncidence de fréquence 27 n'est pas modifié et l'interrupteur 28 demeure à l'état ouvert. De ce fait, aucune tension n'existe entre les lignes 11 et 12 aux bornes du détecteur de tension 22 qui maintient l'interrupteur 24 ouvert et le dispositif 23 à l'état passant.

Simultanément, le signal de sortie du détecteur de fréquence 21 est appliqué au dispositif 26 qui commande la dérive ou le glissement de fréquence de l'oscillateur 19. La fréquence de l'oscillateur décroît jusqu'à coïncidence avec la fréquence de la source principale : à ce moment, le détecteur de coïncidence de fréquence 27 engendre un signal de sortie qui provoque simultanément, d'une part, la fermeture de l'interrupteur 25 pour l'application d'une impulsion de synchronisation à l'entrée de synchronisation de l'oscillateur, l'oscillateur entrant alors dans une phase de fonctionnement à oscillations forcées, et, d'autre part, la fermeture de l'interrupteur synchrone 28. Le détecteur de tension 22, maintenant sous tension, commande simultanément, d'une part, le blocage du dispositif 23 et donc l'arrêt de l'alimentation du second enroulement primaire 3 et, d'autre part, la fermeture de l'interrupteur 24 provoquant l'alimentation du premier enroulement primaire 2.

Grâce à ce dispositif, on est assuré que le passage de fourniture d'énergie électrique du second enroulement primaire 3 au premier enroulement primaire 2 ne s'effectue qu'à la coïncidence des fréquences respectives de l'oscillateur et de la source principale, indépendamment du moment où disparaît la coupure, avec continuité dans l'alternance au cours de laquelle s'effectue le passage.

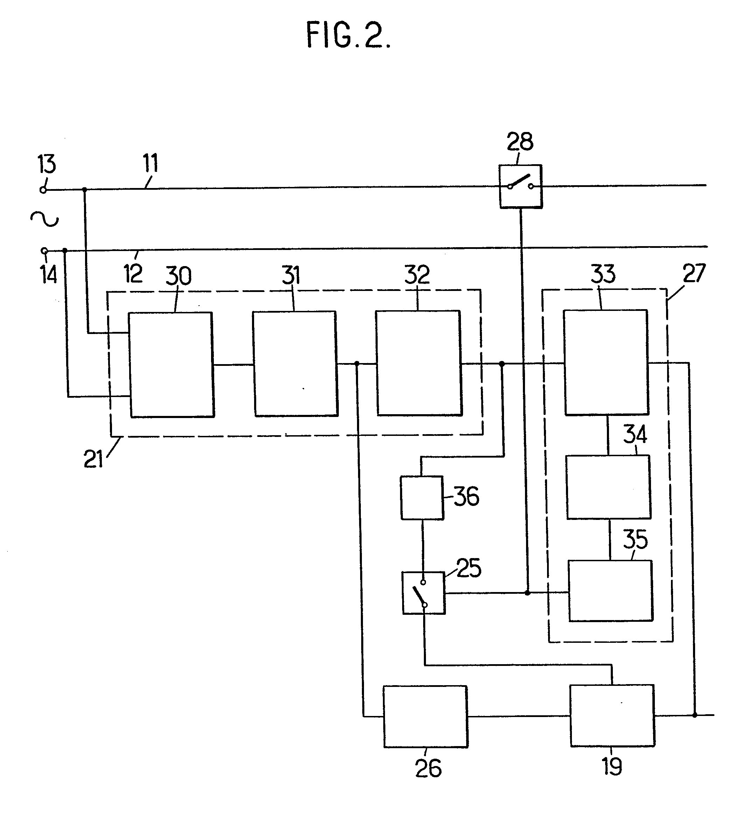

La figure 2 montre schématiquement un mode de réalisation préféré d'une partie du dispositif de la figure 1 (les mêmes références numériques ont été conservées pour désigner les éléments identiques à ceux de la figure 1).

Le détecteur de fréquence 21 comprend un transformateur abaisseur de tension 30 dont l'enroulement primaire est raccordé aux conducteurs 11, 12 et dont l'enroulement secondaire est raccordé à un dispositif redresseur monoalternance 31. La sortie de celui-ci est connectée à l'entrée d'un dispositif de mise en forme 32 qui délivre des impulsions rectangulaires positives correspondant aux demi-ondes positives fournies par le dispositif redresseur 31 et ayant donc la même fréquence que le signal alternatif apparaissant aux bornes 13, 14.

La sortie du dispositif de mise en forme 32 - qui constitue également une sortie du détecteur de fréquence 21 - est raccordée, d'une part, à une entrée d'une balance 33 dont l'autre entrée est reliée à la sortie de l'oscillateur 19 - les deux entrées de la balance 33 constituant également les deux entrées du dispositif de coïncidence de fréquence 27 - et, d'autre part, à un générateur de signaux de synchronisation 36 qui forme des impulsions à partir des alternances positives fournies en sortie du dispositif 32. La sortie du générateur 36 est connectée à l'entrée de synchronisation de l'oscillateur 19 par l'intermédiaire de l'interrupteur 25, comme cela a déjà été indiqué.

A titre d'exemple, la balance 33 peut être constituée sous forme de deux transistors montés en opposition, avec émetteurs réunis, dont les bases constituent les deux susdites entrées et dont les collecteurs sont connectés respectivement aux bornes d'un pont de diodes. On peut avantageusement utiliser à cet effet des transistors à effet de champ de type MOS.

La sortie de la balance 33 est réunie à l'entrée d'un convertisseur 34 transformant le signal délivré par la balance en un signal tout ou rien, le convertisseur 34 pouvant par exemple être un convertisseur photoélectronique, tel qu'un couple diode électroluminescente-phototransistor.

Enfin, la sortie du convertisseur 34 est raccordée à un dispositif 35 de mise en forme du signal dont la sortie est elle-même reliée aux entrées de commande des interrupteurs 25 et 28.

La sortie du dispositif redresseur monoalternance 31 est également reliée au dispositif de commande 26, comme déjà indiqué.

Comme il va de soi et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes.

REVENDICATIONS

1 - Procédé pour, dans un dispositif d'alimentation électrique délivrant sans interruption une énergie alternative à une charge et susceptible d'être alimenté par une source principale et une source auxiliaire de secours, faire passer, sans discontinuité ni saut de fréquence de l'énergie alternative délivrée à la charge, l'alimentation de la charge de la source principale à la source auxiliaire lors de l'apparition d'une panne (coupure) de la source principale et réciproquement de la source auxiliaire à la source principale lors de la disparition de ladite panne, caractérisé en ce qu'il comprend la succession des étapes suivantes :

- on détecte l'apparition d'une panne de la source principale,

- on déconnecte la charge de la source principale, ladite charge étant alors alimentée par la source auxiliaire d'une façon en soi connue,

- on détecte la disparition de la panne de la source principale,

- on fait dériver la fréquence de l'énergie alternative fournie par la source auxiliaire,

- on compare ladite fréquence de la source auxiliaire et la fréquence de la source principale,

- on détecte la venue en coïncidence de ces deux fréquences,

- et, au moment de cette coïncidence, on connecte à nouveau la charge sur la source principale et on arrête la fourniture d'énergie électrique à la charge à partir de la source auxiliaire.

2 - Procédé selon la revendication 1, caractérisé en ce que, au cours de la panne de la source principale, la source auxiliaire fournit à la charge une énergie alternative ayant une fréquence égale à la fréquence nominale de la source principale et en ce que la dérive en fréquence de la source auxiliaire s'effectue dans le sens d'une diminution de fréquence.

3 - Dispositif d'alimentation électrique apte à délivrer sans interruption une énergie électrique alternative à une charge, comportant :

- un transformateur (1) possédant un ensemble secondaire connectable à la charge à alimenter,

- des premiers moyens de connexion (13, 14) à une source électrique alternative principale, ces premiers moyens de connexion étant raccordés à l'ensemble primaire du transformateur,

- des seconds moyens de connexion (15, 16) à une source électrique continue auxiliaire, ces seconds moyens étant raccordés à des moyens oscillateurs de puissance (18, 19) eux-mêmes raccordés à l'ensemble primaire du transformateur,

- des moyens (22) de détection d'une panne de la source principale,

- des moyens de commande (23, 24), placés sous la dépendance desdits moyens de détection, pour commander sélectivement l'alimentation de l'ensemble primaire du transformateur soit à partir de la source principale lorsque celle-ci est en état de fonctionnement, soit à partir de la source auxiliaire lorsque la source principale est en panne (coupure),

- et des moyens de synchronisation associés auxdits moyens de commande pour synchroniser le passage de l'alimentation d'une source à l'autre de manière telle qu'il n'en résulte aucune discontinuité dans l'alimentation alternative de la charge,

caractérisé en ce que, pour le passage de l'alimentation depuis la source auxiliaire à l'alimentation depuis la source principale lors de la disparition d'une panne de cette dernière, les moyens de synchronisation comprennent :

- des moyens (21) de détection de la fréquence de la source principale,

- des moyens de détection de la fréquence des moyens oscillateurs de puissance,

- des moyens (26) de commande de dérive en fréquence des moyens oscillateurs de puissance (18, 19), ces moyens de commande de dérive en fréquence étant sous la dépendance des moyens (21) de détection de la fréquence de la source principale,

- des moyens (27) de détection de la coïncidence des fréquences de la source principale et des moyens oscillateurs de puissance,

- et des moyens interrupteurs synchrones (28), placés sous la commande desdits moyens de détection de coïncidence des fréquences, pour déconnecter la source principale de l'ensemble primaire du transformateur lorsque survient une panne de la source principale et pour reconnecter la source principale à l'ensemble primaire du transformateur lorsque ladite panne a disparu et que les susdites fréquences coïncident.

4 - Dispositif selon la revendication 3, caractérisé en ce que les moyens (22) de détection d'une panne de la source principale sont des moyens de détection de tension, en ce que les moyens (21) de détection de la fréquence de la source principale et les moyens (22) de détection de la tension de la source principale sont disposés dans cet ordre entre la source principale et l'ensemble primaire du transformateur, et en ce que les moyens interrupteurs synchrones (28) sont disposés entre les moyens de détection de la fréquence et les moyens de détection de la tension de la source principale.

5 - Dispositif selon la revendication 3 ou 4, dans lequel les moyens oscillateurs de puissance comprennent un oscillateur (19) et un inverseur de puissance (18), caractérisé en ce que les moyens de commande de dérive en fréquence sont raccordés à l'oscillateur.

6 - Dispositif selon l'une quelconque des revendications 3 à 5, dans lequel les moyens oscillateurs de puissance comprennent un oscillateur (19) et un inverseur de puissance (18), caractérisé en ce qu'entre l'oscillateur et l'inverseur de puissance est disposé un organe de blocage (23) placé sous la commande des moyens de détection de la tension de la source principale, de manière telle que, lorsque ladite source principale fonctionne normalement, les moyens de blocage déconnectent l'oscillateur et l'inverseur de puissance tandis que, en cas de panne de la source principale, les moyens de blocage connectent l'inverseur de puissance à l'oscillateur.

7 - Dispositif selon l'une quelconque des revendications 3 à 6, caractérisé en ce que la fréquence de la source auxiliaire est égale à la fréquence nominale de la source principale et en ce que les moyens de commande de dérive en fréquence sont agencés pour provoquer une diminution de la fréquence de la source auxiliaire.

8 - Dispositif selon l'une quelconque des revendications 3 à 7, caractérisé en ce que l'ensemble primaire du transformateur (1) comprend un premier enroulement primaire (2) raccordé aux bornes de connexion (13, 14) de la source principale et un second enroulement primaire (3) raccordé aux bornes de connexion (15, 16) de la source auxiliaire.

9 - Dispositif selon l'une quelconque des revendications 3 à 8, caractérisé en ce que le transformateur est un transformateur ferro-résonnant.

FIG.1.

FIG.2.

Office européen
des brevets

RAPPORT DE RECHERCHE EUROPEENNE

0074910
Numéro de la demande

EP 82 40 1689

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | H 02 J 9/06 |
| Y | BE-A- 680 274 (BLESSING-ETRA) *Page 3, ligne 13 - page 5, ligne 6; figures 1,2,3* | 1,3-5, 8,9 | H 02 J 3/42 |
| Y | FR-A-2 224 927 (COMPAGNIE GENERALE D'ELECTRONIQUE INDUSTRIELLE LEPAUTE) *Page 1, ligne 17 - page 2, ligne 28; page 4, ligne 27 - page 6, ligne 34; figure 1* | 1,5 | |
| A | FR-A-2 309 065 (WESTERN ELECTRIC) *Page 8, ligne 11 - page 13, ligne 37; page 24, lignes 30-33; figure 1* | 1,3-5, 8,9 | |

| | | | DOMAINES TECHNIQUES RECHERCHES (Int. Cl. ³) |
|---|---|---|---|
| A | FR-A-2 134 457 (WESTINGHOUSE) *Page 11, ligne 33 - page 16, ligne 10; figure 8* | 1,3,5, 9 | H 02 J 9/00 H 02 J 3/00 H 02 H 7/00 |
| A | FR-A-2 313 798 (SIEMENS) *Page 5, ligne 6 - page 6, ligne 1; figure 2* | 1 | |
| A | US-A-3 651 427 (P.E.ROLFES et al.) *Résumé; colonne 7, ligne 4 - colonne 8, ligne 9; figure 4* | 2,7 | |
| | --- -/- | | |

Le présent rapport de recherche a été établi pour toutes les revendications

| Lieu de la recherche LA HAYE | Date d'achèvement de la recherche 20-12-1982 | Examinateur POINT A.G.F. |
|---|---|---|

# Office européen des brevets

## RAPPORT DE RECHERCHE EUROPEENNE

| | DOCUMENTS CONSIDERES COMME PERTINENTS | | Page 2 |
|---|---|---|---|

| Categorie | Citation du document avec indication, en cas de besoin, des parties pertinentes | Revendication concernée | CLASSEMENT DE LA DEMANDE (Int. Cl. ³) |
|---|---|---|---|
| A | US-A-3 293 446 (J.BAUDE) *Colonne 1, lignes 36-43; colonne 4, lignes 34-71; figures 2,3,4* ----- | 5,6 | |
| | | | **DOMAINES TECHNIQUES RECHERCHES (Int. Cl. ³)** |

Le présent rapport de recherche a été établi pour toutes les revendications

| Lieu de la recherche LA HAYE | Date d achèvement de la recherche 20-12-1982 | Examinateur POINT A.G.F. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

      

& : membre de la même famille, document correspondant

OEB Form 1503 03.82